(19) **Europäisches Patentamt**

**European Patent Office**

**Office européen des brevets**

(11) **EP 1 098 262 A2**

(12) **EUROPEAN PATENT APPLICATION**

(43) Date of publication:
09.05.2001 Bulletin 2001/19

(51) Int. Cl.7: **G06F 17/60**

(21) Application number: **00123927.6**

(22) Date of filing: **03.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **04.11.1999 JP 31438099**

(71) Applicant: **NEC CORPORATION Tokyo (JP)**

(72) Inventor: **Ito, Noriko Minato-ku, Tokyo (JP)**

(74) Representative: **Betten & Resch Reichenbachstrasse 19 80469 München (DE)**

(54) **Information selecting apparatus and information selecting method which are targeted for car user and intended to extract advertisement by considering taste of car user and running time, position of car, and location of advertised shop, and recording medium**

(57) An information selecting method includes (a),(b),(c),(d),(e),(f),(g),(h) and (i). The (a) includes providing a plurality of advertisement data (1011), wherein each of the plurality of advertisement data (1011) includes a advertisement information (1011b) and a minimum providing frequency (1011d), the minimum providing frequency (1011d) indicating of a minimum number of times the advertisement information (1011b) is provided to a user of a vehicle. The (b) includes counting a previous number of times the advertisement information (1011b) has been provided to the user during a past period. The (c) includes setting a plurality of advertisement providing position data, each of the plurality of advertisement position data indicating of a specific position where the advertisement information (1011b) is provided to the user. The (d) includes evalu-

ating each of the plurality of advertisement data (1011) at the specific position corresponding to each of the plurality of advertisement position data. The (e) includes generating a specific evaluation value based on the result of the (d). The (f) includes selecting a predetermined number of the advertisement data (1011) based on the specific evaluation value. The (g) includes determining a schedule number of times the advertisement information (1011b) is provided to the user during a next period based on the result of the (f). The (h) includes judging whether or not the minimum providing frequency (1011d) is satisfied in each advertisement data (1011). The (i)includes controlling the schedule number such that the minimum providing frequency (1011d) is satisfied in each advertisement data (1011).

Fig. 1

**EP 1 098 262 A2**

**Description**

**Background of the Invention**

1. Field of the Invention

The present invention relates to an information selecting apparatus, an information selecting method and a recording medium. More particularly, the present invention relates to an information selecting apparatus and an information selecting method which are targeted for a car user and intended to rank an advertisement information, depending on a time, a location and a taste, for the car user, and a recording medium.

2. Description of the Related Art

Conventionally, a car navigation system has been well known for calculating a current position of a car running on a road, displaying it on a screen such as a liquid crystal display or the like, and displaying a guide route for a road which the car must travel toward a goal. In such a system, the current position of the car is calculated in accordance with a travel direction of the car measured by using an azimuth sensor such as a gyro or the like, and a travel distance of the car measured by using a car speed sensor or a distance sensor. On the other hand, the travel distance of the car is determined by measuring a rotation number of an output shaft of a transmission or the like, and then multiplying the rotation number by a distance coefficient which implies a car travel distance for each rotation of a tire.

The car navigation system can display a current position of the car and a facility (a gasoline stand, a restaurant or the like) located in the travel direction of the car when the car is running along the guide route or a proper road (for example, inventions disclosed in Japanese Laid Open Patent Application (JP-A-Heisei, 6-250586) and Japanese Laid Open Patent Application (JP-A-Heisei, 5-216404). Also, an invention disclosed in Japanese Laid Open Patent Application (JP-A-Heisei, 10-30932) can display a desirable guide spot (a sightseeing spot and the like) located around the road on which the car is running, through an operation of the user, depending on the taste of the user.

On the other hand, in a commercially compound television broadcast, a commercial program is typically inserted between usual broadcast programs. An invention disclosed in Japanese Laid Open Patent Application (JP-A-Heisei, 9-214875) provides a television receiver and a radio receiver which have a function of picking up and selecting only commercial programs required by a viewer from the broadcasted commercial programs, and arranging and sorting them, making into a database, and then using them. However, this receiver satisfies only a request from the viewer, and it does not satisfy a request from a sponsor providing the commercial program.

In the conventional car navigation system, let us consider that an advertisement information of a guide spot and a facility with regard to a travel direction of the car is given to the car user. It is assumed that the advertisement information is a data stored on a memory medium, such as CD-ROM or the like, in the car navigation system. Usually, the advertisement information may give an uncomfortable feeling to the user, since it is broken into and displayed in a typical broadcast. Thus, it is necessary to provide the advertisement by considering a taste of the car user, a time and a location. On the other hand, the sponsor of the advertisement has a demand to check the number of providing advertisement and accordingly specify the number of times.

Japanese Laid Open Patent Application (JP-A-Heisei, 10-505441) discloses a dual-channel advertisement method in relation to a position of a car. A car information device collects an information with regard to a point of a special interest. A user calls and indicates the information, including a display indicative of a distance and a movement direction to the interested point specified for a current position of the car at that time. A dual-channel advertisement is sent through a voice broadcast and a data broadcast. When listening to the interested advertisement through the voice broadcast, the user captures a related data broadcast including a position of an advertiser from detailed text message information containing other items. Thus, a relative direction and a movement distance from the current position of the car to the interested point are provided. A large number of interested points are stored for the sake of selective review. Hence, the user establishes a database including a point in which a particular person is very interested.

**Summary of the Invention**

The present invention is accomplished in view of the above mentioned problems. Therefore, an object of the present invention is to enable an advertisement considering a taste of a car user, a time such as a run time or the like, and a location and a position of a car and a shop to be provided for the car user, and to satisfy a request from a sponsor of the advertisement with regard to the number of times of providing.

In order to achieve an aspect of the present invention, an information selecting method, includes: (a) providing a plurality of advertisement data, wherein each of the plurality of advertisement data includes a advertisement information and a minimum providing frequency, the minimum providing frequency indicating of a minimum number of times the advertisement information is provided to a user of a vehicle; (b) counting a previous number of times the advertisement information has been provided to the user during a past period; (c) setting a plurality of advertisement providing position data, each of the plurality of advertisement position data indicating of a specific position where the advertisement information is provided to the user; (d) evaluating each of the plurality of advertisement data at the specific position corresponding to each of the plurality of advertisement position data; (e) generating a specific evaluation value based on the result of the (d); (f) selecting a predetermined number of the advertisement data based on the specific evaluation value; (g) determining a schedule number of times the advertisement information is provided to the user during a next period based on the result of the (f); (h) judging whether or not the minimum providing frequency is satisfied in each advertisement data; and (i) controlling the schedule number such that the minimum providing frequency is satisfied in each advertisement data.

In this case, an information selecting method further includes: (j) evaluating each of the plurality of advertisement data with regard to a position at the specific position corresponding to each of the plurality of advertisement position data to generate a position evaluation value, and wherein the (e) includes generating the specific evaluation value based on the position evaluation value, and wherein the (i) includes controlling the schedule number based on the position evaluation value.

Also in this case, an information selecting method further includes: (k) evaluating each of the plurality of advertisement data with regard to a time at the specific position corresponding to each of the plurality of advertisement position data to generate a time evaluation value, and wherein the (e) includes generating the specific evaluation value based on the time evaluation value.

Further in this case, the (a) includes providing the plurality of advertisement data, the each advertisement data including an attribute in addition to the advertisement information and the minimum providing frequency, and wherein the information selecting method further includes: (l) providing a taste data indicating a taste of the user; and (m) evaluating each of the plurality of advertisement data with regard to a taste at the specific position corresponding to each of the plurality of advertisement position data to generate a taste evaluation value based on the taste data and the attribute, and wherein the (e) includes generating the specific evaluation value based on the taste evaluation value.

In this case, the (a) includes providing the plurality of advertisement data, the each advertisement data including an attribute in addition to the advertisement information and the minimum providing frequency, and wherein the information selecting method further includes: (n) providing a taste data indicating a taste of the user; and (o) evaluating each of the plurality of advertisement data with regard to a taste at the specific position corresponding to each of the plurality of advertisement position data to generate a taste evaluation value based on the taste data and the attribute, and (p) evaluating each of the plurality of advertisement data with regard to a position at the specific position corresponding to each of the plurality of advertisement position data to generate a position evaluation value, and (q) evaluating each of the plurality of advertisement data with regard to a time at the specific position corresponding to each of the plurality of advertisement position data to generate a time evaluation value, and wherein the (e) includes generating the specific evaluation value based on the position evaluation value, the time evaluation value and the taste evaluation value.

Also in this case, the (c) includes setting the plurality of advertisement providing position data based on a route data indicating of a running route of the vehicle, a vehicle position data indicating of a current position of the vehicle and an advertisement providing timing data indicating of a timing when the advertisement information is provided.

Further in this case, the advertisement providing timing data corresponds to one of a predetermined time, a predetermined length and a predetermined dividing number of a distance.

In this case, the (a) includes providing the plurality of advertisement data, the each advertisement data including a shop position data indicating of a position of a shop of which the advertisement information is provided in addition to the advertisement information and the minimum providing frequency, and wherein the (j) includes: (r) calculating a distance from the shop to the specific position corresponding to each of the plurality of advertisement position data based on the shop position data and each of the plurality of advertisement providing position data; and (s) generating the position evaluation value based on the distance.

Also in this case, the (a) includes providing the plurality of advertisement data, the each advertisement data including a shop position data indicating of a position of a shop of which the advertisement information is provided and a providing recommendation period which is recommended for providing the advertisement information in addition to the advertisement information and the minimum providing frequency, and wherein the (k) includes: (t) calculating a distance from the shop to the specific position corresponding to each of the plurality of advertisement position data based on the shop position data and each of the plurality of advertisement providing position data; (u) calculating a arrival expectation time when the vehicle arrives at the shop based on the distance and a current time; and (v) generating the time evaluation value based on the providing recommendation period and the arrival expectation time.

Further in this case, each of the attribute and the taste data is represented by a keyword vector and wherein the (m) includes generating the taste evaluation value based on a distance between the keyword vector of the attribute and the keyword vector of the taste data.

In order to achieve another aspect of the present invention, an information selecting apparatus, includes: a advertisement database including a plurality of advertisement data, wherein each of the plurality of advertisement data includes a advertisement information and a minimum providing frequency, the minimum providing frequency indicating of a minimum number of times the advertisement information is provided to a user of a vehicle; an output history memory counting a previous number of times the advertisement information has been provided to the user during a past period; an advertisement ranking generator setting a plurality of advertisement providing position data, each of the plurality of advertisement position data indicating of a specific position where the advertisement information is provided to the user and evaluating each of the plurality of advertisement data at the specific position corresponding to each of the plurality of advertisement position data to generate a specific evaluation value and selecting a predetermined number of the advertisement data based on the specific evaluation value to determine a schedule number of times the advertisement information is provided to the user during a next period and judging whether or not the minimum providing frequency is satisfied in each advertisement data; and controlling the schedule number such that the minimum providing frequency is satisfied in each advertisement data.

In this case, the advertisement ranking generator evaluates each of the plurality of advertisement data with regard to a position at the specific position corresponding to each of the plurality of advertisement position data to generate a position evaluation value, and wherein the advertisement ranking generator generates the specific evaluation value based on the position evaluation value, and controls the schedule number based on the position evaluation value.

Also in this case, the advertisement ranking generator evaluates each of the plurality of advertisement data with regard to a time at the specific position corresponding to each of the plurality of advertisement position data to generate a time evaluation value, and generates the specific evaluation value based on the time evaluation value.

Further in this case, the each advertisement data includes an attribute in addition to the advertisement information and the minimum providing frequency, and wherein the information selecting apparatus further includes: a taste obtainer providing a taste data indicating a taste of the user; and wherein the advertisement ranking generator evaluates each of the plurality of advertisement data with regard to a taste at the specific position corresponding to each of the plurality of advertisement position data to generate a taste evaluation value based on the taste data and the attribute, and generates the specific evaluation value based on the taste evaluation value.

In this case, the each advertisement data includes an attribute in addition to the advertisement information and the minimum providing frequency, and wherein the information selecting apparatus further includes: a taste obtainer providing a taste data indicating a taste of the user; and wherein the advertisement ranking generator evaluates each of the plurality of advertisement data with regard to a taste at the specific position corresponding to each of the plurality of advertisement position data to generate a taste evaluation value based on the taste data and the attribute, and evaluates each of the plurality of advertisement data with regard to a position at the specific position corresponding to each of the plurality of advertisement position data to generate a position evaluation value, and evaluates each of the plurality of advertisement data with regard to a time at the specific position corresponding to each of the plurality of advertisement position data to generate a time evaluation value, and wherein the advertisement ranking generator generates the specific evaluation value based on the position evaluation value, the time evaluation value and the taste evaluation value.

Also in this case, the advertisement ranking generator sets the plurality of advertisement providing position data based on a route data indicating of a running route of the vehicle, a vehicle position data indicating of a current position of the vehicle and an advertisement providing timing data indicating of a timing when the advertisement information is provided.

Further in this case, the timing of the advertisement providing timing data corresponds to one of a predetermined time, a predetermined length and a predetermined dividing number of a distance.

In this case, the each advertisement data includes a shop position data indicating of a position of a shop of which the advertisement information is provided in addition to the advertisement information and the minimum providing frequency, and wherein the advertisement ranking generator calculates a distance from the shop to the specific position corresponding to each of the plurality of advertisement position data based on the shop position data and each of the plurality of advertisement providing position data; and generates the position evaluation value based on the distance.

Also in this case, the each advertisement data includes a shop position data indicating of a position of a shop of which the advertisement information is provided and a providing recommendation period which is recommended for providing the advertisement information in addition to the advertisement information and the minimum providing frequency, and wherein the advertisement ranking generator calculates a distance from the shop to the specific position corresponding to each of the plurality of advertisement position data based on the shop position data and each of the plurality of advertisement providing position data, and calculates a arrival expectation time when the vehicle arrives at the shop based on the distance and a current time and generates the time evaluation value based on the providing recommendation period and the arrival expectation time.

Further in this case, each of the attribute and the taste data is represented by a keyword vector and wherein the advertisement ranking generator generates the taste evaluation value based on a distance between the keyword vector of the attribute and the keyword vector of the taste data.

## Brief Description of the Drawings

Fig. 1 is a block diagram showing a configuration of a first embodiment of the present invention;
Fig. 2 is a flowchart showing an operation of the first embodiment of the present invention;
Fig. 3 is a flowchart showing in detail a part of the operation of the first embodiment of the present invention;
Fig. 4 is a flowchart showing in detail a part of the operation of the first embodiment of the present invention;
Fig. 5 is a flowchart showing in detail a part of the operation of the first embodiment of the present invention;
Fig. 6 is a flowchart showing in detail a part of the operation of the first embodiment of the present invention;
Fig. 7 is an explanation view showing a providing advertisement list used in the first embodiment of the present invention; and
Fig. 8 is a diagrammatic view illustrating a third embodiment of the present invention.

## Description of the Preferred Embodiments

An embodiment of the present invention will be described below with reference to the attached drawings.
A first embodiment of the present invention will be described below in detail with reference to the attached drawings.

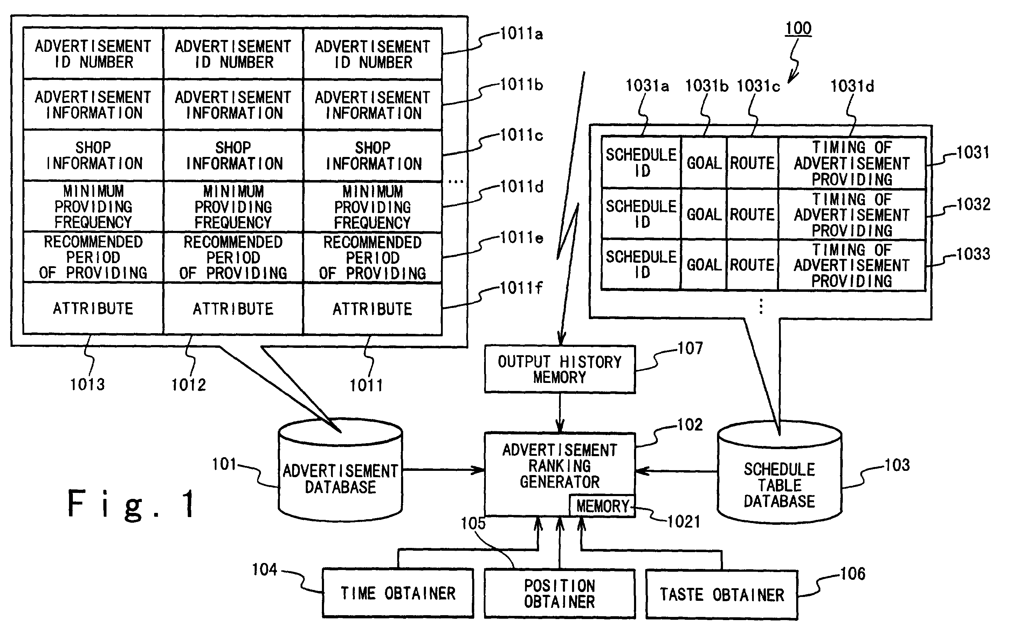

Fig. 1 is a block diagram showing the configuration of an information selecting apparatus 100 targeted for a car user, in the first embodiment of the present invention.
Referring to Fig. 1, the information selecting apparatus 100 targeted for the car user in the first embodiment of the present invention is provided with an advertisement database 101, a time obtainer 104, a position obtainer 105, a taste obtainer 106, an advertisement ranking generator 102, a schedule table database 103 and an output history memory 107.
The advertisement database 101 stores therein advertisement data 1011 to 1013 including advertisement information. The time obtainer 104 obtains a current time. The position obtainer 105 obtains a current position of a car. The taste obtainer 106 obtains a taste of a user. The advertisement ranking generator 102 evaluates the advertisement data in accordance with the current time, the current position of the car and the taste information of the user. The schedule table database 103 accumulates run schedule data 1031 to 1033 of the car. The output history memory 107 stores a providing history of the advertisement.
A memory 1021 is built in the advertisement ranking generator 102.
The advertisement database 101 stores therein a plurality of kinds of advertisement data 1011 to 1013. The advertisement data 1011, which is one of the plurality of advertisement data 1011 to 1013, is composed of an advertisement ID number 1011a of the advertisement data, an advertisement information 1011b, a shop information 1011c, a minimum providing frequency (the minimum number of times to provide advertisement within a certain period) 1011d, a providing recommendation period 1011e and an advertisement information attribute (for example, a keyword indicative of a kind of an advertisement or the like) 1011f. The data configurations are similar in the other advertisement data 1012, 1013 in the plurality of advertisement data 1011 to 1013.
The plurality of run schedule data 1031 to 1033 are stored in advance in the schedule table database 103 by the user. The run schedule data 1031, which is one of the plurality of run schedule data 1031 to 1033, is composed of a schedule ID 1031a that is an identifier, a goal 1031b, a route (a pass point from a start point to the goal is set as a list of a data represented by a combination of a latitude, a longitude and a road name, for example, for each branch of a road) 1031c and a timing of advertisement providing 1031d. The data configuration is similar in the other run schedule data 1032, 1033 in the plurality of run schedule data 1031 to 1033.
The time obtainer 104 is a device for obtaining a current time. For example, it is a watch. However, it is not limited to the watch.
The position obtainer 105 is a device for obtaining a current position of the car. For example, it is a GPS receiver for outputting a position information of a latitude and a longitude in accordance with a signal from a satellite. However, it is not limited to the GPS receiver.
The taste obtainer 106 is a device for obtaining a taste of a driver. For example, a device may be considered for receiving a keyword indicative of the taste of the driver through a screen or a voice recognizing unit, and storing therein the keyword data and then outputting in response to a request. However, it is not limited to such a device.
The output history memory 107 is a memory for storing therein the number of times of advertisement providing until that time. Actually, if an advertisement is displayed (provided) on a display (not shown), the output history memory 107 recognizes the advertisement providing, counts the number of times of providing and holds the number of times of providing.

The operations of the information selecting apparatus 100 targeted for the car user in the first embodiment of the present invention will be described below with reference to the drawings.

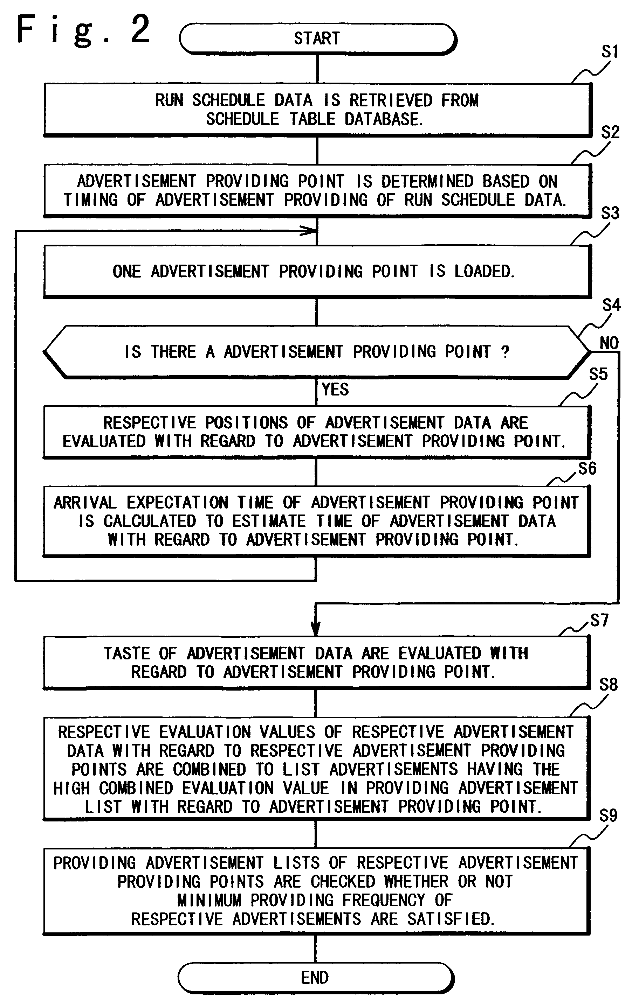

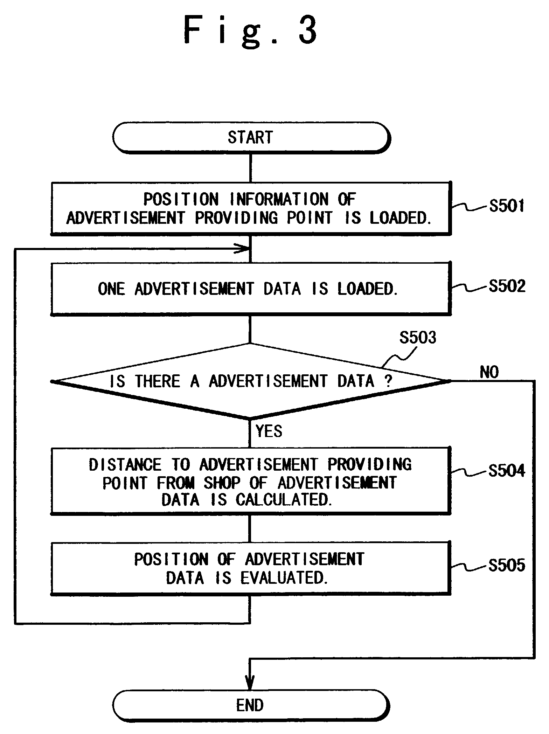

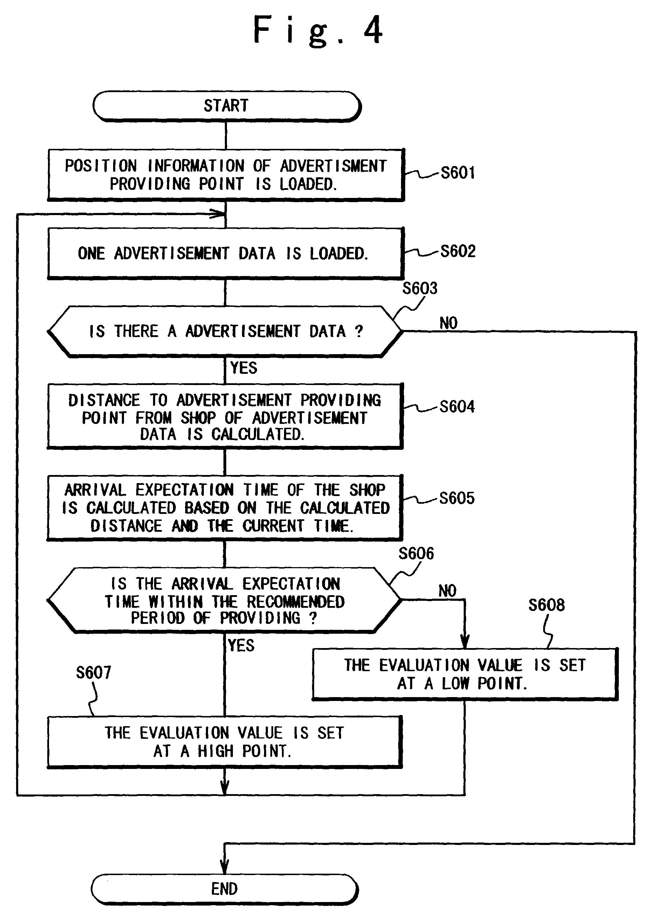

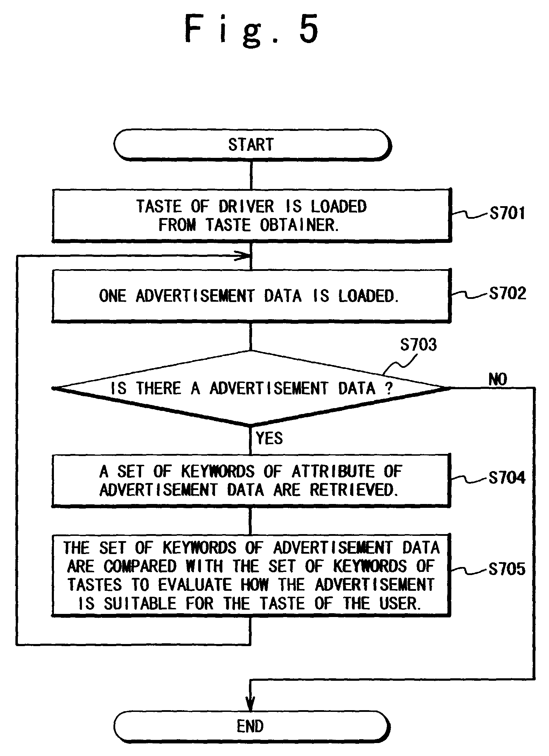

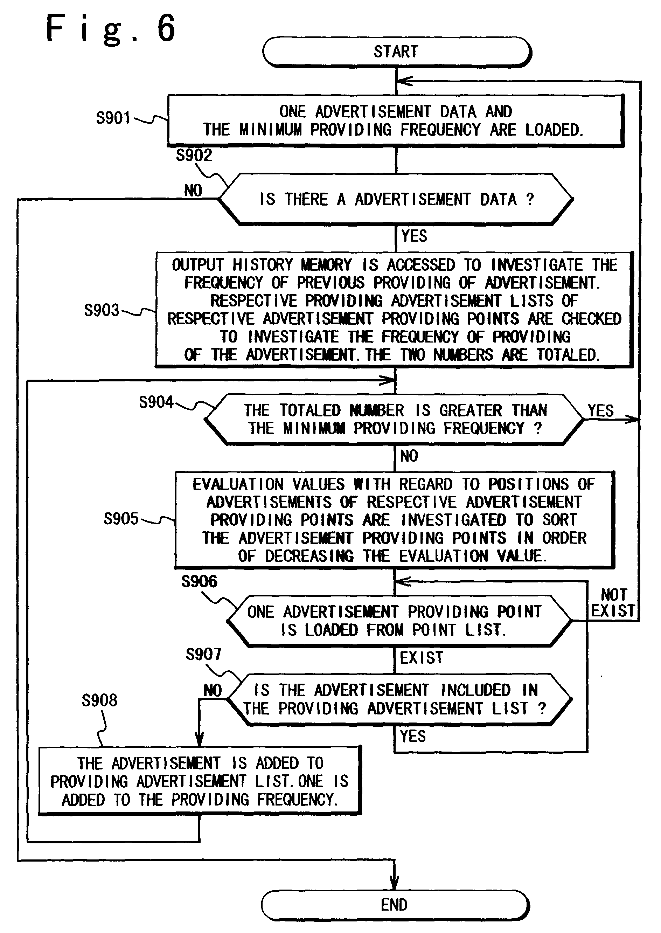

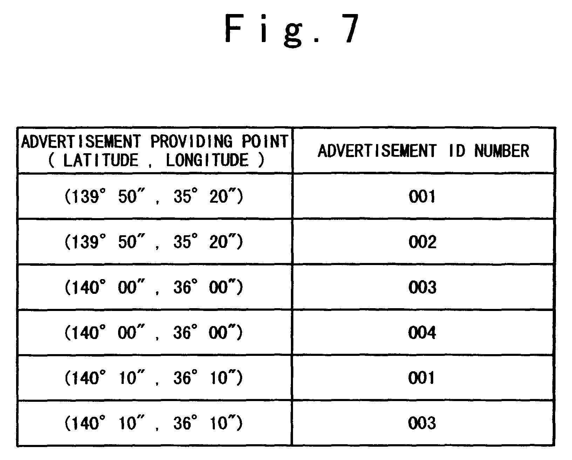

Fig. 2 is a schematic flowchart showing the operations of the information selecting apparatus 100 targeted for the car user in the first embodiment of the present invention. Fig. 3 is a flowchart showing the operations in evaluating an advertisement information based on a position information in the first embodiment of the present invention (a detailed description of a step S5 in Fig. 2). Fig. 4 is a flowchart showing the operations in evaluating an advertisement information based on a time information in the first embodiment of the present invention (a detailed description of a step S6 in Fig. 2). Fig. 5 is a flowchart showing the operations in evaluating an advertisement information based on a taste information in the first embodiment of the present invention (a detailed description of a step S7 in Fig. 2). Fig. 6 is a flowchart showing the operations in investigating the number of times of advertisement providing and modifying an evaluation value, in the first embodiment of the present invention (a detailed description of a step S9 in Fig. 2). And, Fig. 7 is an explanation view illustrating an providing advertisement list.

I . Setting of Advertisement Providing Point

At first, the advertisement ranking generator 102 retrieves the run schedule data 1031 from the schedule table database 103 (Step S1 of Fig. 2).

It extracts the timing of advertisement providing 1031d in the run schedule data 1031, and determines an advertisement providing point on the route 1031c in the run schedule data 1031 (Step S2 of Fig. 2), and stores the determined result in the memory 1021.

Here, the advertisement providing point implies a set of points (latitudes and longitudes) at which the advertisement is provided. The information (a latitude and a longitude) of the current position of the car obtained from the position obtainer 105 is used in determining the advertisement providing point.

At first, let us consider that the timing of advertisement providing 1031d is specified, for example, depending on a time (for each X minute or the like). In this case, at the step S2, a position (a latitude and a longitude) for each timing of advertisement providing (X minute) 1031d is determined as an advertisement providing point, in accordance with an expectation time of an arrival at a goal and an arrival expectation position.

Next, let us consider that the timing of advertisement providing 1031d is specified, for example, for each certain distance (for each X (km)). In this case, at the step S2, a position (a latitude and a longitude) for each specified distance (X (km)) on the route 1031c is determined as the advertisement providing point.

Moreover, let us consider that the timing of advertisement providing 1031d is specified, for example, depending on a rate of a distance to a goal (for each 1/X). In this case, at the step S2, the route 1031c is divided for each timing of advertisement providing (1/X), and its division point (position) is determined as the advertisement providing point.

II. Evaluation with Regard to Position of Advertisement Data, at Advertisement Providing Point

Next, the advertisement ranking generator 102 loads one advertisement providing point stored in the memory 1021 at the step S2, from the memory 1021 (Step S3 of Fig. 2).

Next, the advertisement ranking generator 102 evaluates the positions of the respective advertisement data 1011 to 1013, at the advertisement providing point loaded at the step S3 (Step S5 of Fig. 2).

Here, the content at the step S5 of Fig. 2 is described with reference to Fig. 3.

At first, a position information of an advertisement providing point is loaded from the memory 1021 (Step S501 of Fig. 3).

Next, the advertisement data 1011 is retrieved from the advertisement database 101 (Step S502 of Fig. 3) to then extract the shop information 1011c. The shop information 1011c includes a shop name and a shop position (a latitude and a longitude).

A distance to the advertisement providing point from the shop position included in the shop information 1011c is calculated (Step S504 of Fig. 3).

An evaluation value fs with regard to a position is calculated in accordance with the distance calculated at the step S504 (Step S505 of Fig. 3). A method for calculating the evaluation value fs at the step S505 will be described below.

In calculating the evaluation value fs of each advertisement data at each advertisement providing point, it is limited to, for example, only an advertisement of a shop located at an area within a circle of a certain radius from each advertisement providing point, for the convenience of a calculation.

Let us suppose that advertisement providing points are P = {P1, P2, P3 · · · to Pn} (Pi is a set of a latitude and a longitude). A location of a shop in an advertisement is assumed to be A (a latitude and a longitude).

An evaluation value fs (A,P) with regard to a position of an advertisement data in an advertisement providing point is represented by:

$$fs(A, P) = 2 - \frac{2}{1 + exp\left(-\alpha\frac{|P - A|}{r}\right)}$$

$$0 \le fs(A, P) \le 1$$

Here, r denotes a distance from P, and corresponds to the radius of the circle used in the above-mentioned limitation. In short, it is limited to a shop whose location A exists within the circle of the radius r from P. $\alpha$ is a coefficient indicative of a degree in which the evaluation value fs is reduced depending on the distance. The larger the $\alpha$, the smaller the evaluation value fs. For example, an integer "2" may be used as $\alpha$.

The above-mentioned explanations have been done with regard to the advertisement data 1011. However, the processes at the steps S502 to S505 of Fig. 3 are performed on the respective advertisement data 1012, 1013, ... except the advertisement data 1011.

III. Evaluation with Regard to Time of Advertisement Data, at Advertisement Providing Point

Next, the advertisement ranking generator 102 evaluates the times of the respective advertisement data 1011 to 1013, at the advertisement providing point loaded at the step S3 (Step S6 of Fig. 2).

Here, the content at the step S6 of Fig. 2 is described with reference to Fig. 4.

At first, a position information of an advertisement providing point is loaded from the memory 1021 (Step S601 of Fig. 4).

Next, an advertisement data 1011 is loaded from the advertisement database 101 (Step S602 of Fig. 4) to then extract a shop information 1011c. The shop information 1011c includes a shop name and a shop position (a latitude and a longitude).

A distance to the advertisement providing point from the shop position included in the shop information 1011c is calculated (Step S604 of Fig. 4).

A current position of the car and a current time are loaded from the position obtainer 105 and the time obtainer 104, respectively. An average speed of the car is calculated in accordance with the loaded information of the current position of the car and the current time (not shown). In this case, a time at a certain point is stored in the memory 1021 to then measure an advancement distance after an elapse of a certain period from the time. The average speed of the car is calculated in accordance with the elapse time and the movement distance.

Next, an expectedly necessary time from the current point to the position of the advertisement shop is calculated in accordance with the distance calculated at the step S604 and the average speed at the current point of the car.

Then, an arrival expectation time with regard to the arrival at the advertisement shop is calculated in accordance with the expectedly necessary time calculated at the step S604 and the current time data obtained from the time obtainer 104 (Step S605 of Fig. 4).

Next, the advertisement ranking generator 102 extracts the providing recommendation period 1011e of the advertisement data 1011, and judges whether or not the arrival expectation time determined at the step S605 is within the providing recommendation period 1011e (Step S606 of Fig. 4).

Here, let us suppose that an evaluation value ft with regard to the time of the advertisement data at the advertisement providing point has a value between 0 and 1. If the arrival expectation time is within the providing recommendation period 1011e as the judged result at the step S606, the evaluation value ft of the advertisement at the advertisement providing point is set at a high point (for example, a value close to 1) (Step S607 of Fig. 4). If it is not within the providing recommendation period 1011e, the evaluation value ft is set at a low point (for example, a value close to 0) (Step S608 of Fig. 4).

The method for calculating the evaluation value ft at the steps S607, S608 will be described below.

For example, let us suppose that a start time of the providing recommendation period 1011e with regard to the advertisement of the shop located at the location A is tAs and an end time thereof is tAe. The arrival expectation time determined at the step S605 is assumed to be T. Strictly, this arrival expectation time T is an expectation value.

Thus, it includes an error e (this is a numeral between 0 and 1, and arbitrarily set as a percent value).

The evaluation value ft (A,P) is equivalent to a calculation of a probability that the arrival expectation time T is present in the providing recommendation period 1011e of the shop existing at A.

However, if the arrival expectation time T is present prior to the start time tAs, it is recommendable that the ft (A,P) is not made uniformly small. This is because the arrival expectation time T belongs to the providing recommendation period 1011e of the shop located at A, if it waits until the start time tAs, even in the case of the arrival before the start time tAs. This allowable wait time is defined as m.

From the above-mentioned explanation, the evaluation function ft(A,P) with regard to the time of the advertisement data at the advertisement providing point can be defined by the following equation:

$$ft(A,P) = \begin{cases} \dfrac{l}{2T \cdot e} & (l \geq 0) \\ 0.0 & (l < 0) \end{cases}$$

$$l = \begin{cases} min(tAe, T + T \cdot e) - max(tAs - m, T - T \cdot e) \\ min(tAe, T + T \cdot e) - (T - T \cdot e) & (tAs \text{ is not set}) \\ (T + T \cdot e) - max(tAs - m, T - T \cdot e) & (tAe \text{ is not set}) \\ 2T \cdot e & (tAs \text{ and } tAe \text{ are not set}) \end{cases}$$

The above-mentioned explanations have been done with regard to the advertisement data 1011. However, the processes at the steps S602 to S608 of Fig. 4 are performed on the respective advertisement data 1012, 1013, ... except the advertisement data 1011.

Next, the advertisement ranking generator 102 repeats the processes at the steps S3 to S6 of Fig. 2 for each advertisement providing point.

IV. Evaluation with Regard to Taste of Advertisement Data, at Advertisement Providing Point

Next, the advertisement ranking generator 102 evaluates the tastes of the respective advertisement data 1011 to 1013 (Step S7 of Fig. 2).

Here, the content of the step S7 of Fig. 2 is described with reference to Fig. 5.

At first, it extracts a taste of a driver from the taste obtainer 106 (Step S701 of Fig. 5). For example, the taste data is represented by a set of keywords or a keyword vector (a set of a keyword and its weighting).

Next, it loads an advertisement data 1011 from the advertisement database 101 (Step S702 of Fig. 5).

Next, it retrieves the keyword vector or the keyword set which is the attribute 1011f of the advertisement data 1011 (Step S704 of Fig. 5).

Next, it compares the attribute data 1011f of the advertisement data 1011 retrieved at the step S704 with the taste data of the driver extracted at the step S701, and evaluates how its advertisement is suitable for the taste of the driver, in accordance with the compared result (Step S705 of Fig. 5). Its evaluation result is determined as an evaluation value fu with regard to the taste.

The method for calculating the evaluation value fu at the step S705 will be described below.

For example, if the taste data of the driver and the attribute data 1011f of the advertisement data 1011 are represented by the keyword vector, the evaluation value fu can be determined as a similar degree, in accordance with a distance between both keywords.

Let us suppose that an attribute keyword vector of the advertisement data 1011 is ($\rightarrow$VA) and a taste keyword vector of the driver is ($\rightarrow$VU). The distance of the keywords is represented by a $\cos\theta$ . $\theta$ is an angle from the attribute keyword vector to the taste keyword vector.

An example of an evaluation value f(A,P) with regard to a taste will be described below in detail.

$$fu(A,P)=cos\theta =\frac{\overrightarrow{VA} \cdot \overrightarrow{VU}}{|\overrightarrow{VA}||\overrightarrow{VU}|}$$

$$0 \leq fu(A,P)\leq 1$$

Next, the processes at the steps S702 to S705 of Fig. 5 are carried out for each advertisement data 1012, 1013, ... .

V . Total Evaluation with Regard to Advertisement Data, at Advertisement Providing Point

The total evaluation value f with regard to each shop (advertisement data) is calculated at each advertisement providing point. That is, the evaluation value fs with regard to the position, the evaluation value ft with regard to the time and the evaluation value fu with regard to the taste are combined, and the total point is calculated as the evaluation value f (Step S8 of Fig. 2).

An example of a determination of the total evaluation value f(A,P) will be described below.

However, ws denotes a weighting of a term with regard to a position, wt denotes a weighting of a term with regard to a time, and wu denotes a weighting of a term with regard to a taste of a drier.

$$f(A,P)=ws \cdot fs(A,P)+wt \cdot ft(A,P)+wu \cdot fu(A,P)$$

$$0\leq f(A,P)\leq 1$$

$$0\leq ws\leq 1$$

$$0\leq wt\leq 1$$

$$0\leq wu\leq 1$$

VI. Generation of Providing Advertisement List

This total evaluation value f is calculated for the number of times equal to (the number of shops × the number of advertisement providing points). At each advertisement providing point, an advertisement having a higher evaluation value f is assumed to be a providing advertisement list at its advertisement providing point (Step S8 of Fig. 2). The providing advertisement list is represented by a combination of an advertisement providing point and an advertisement ID number, as shown in Fig. 7.

For example, if the number of times (providing frequency) of advertisements (shops) to be provided at each advertisement providing point is already determined, they are sorted in the order of decreasing the evaluation value f. As the sorted result, only those corresponding to the higher providing frequency are determined as the providing advertisement list. By the way, the number of times of providing at each advertisement providing point is limited to 2, in Fig. 7. Then, the advertisement ID numbers having the higher two evaluation values at the first advertisement providing point (139° 50″ and 35° 20″) are assumed to be (001) and (002).

Here, the advertisement ID number (001) corresponds to an advertisement ID number 1011a of the advertisement data 1011, and the advertisement ID number (002) corresponds to an advertisement ID number 1012a of the advertisement data 1012.

Here, the generated providing advertisement list is stored in the memory 1021.

VI. Check of Minimum Providing Frequency

Next, the advertisement ranking generator 102 checks the providing advertisement list generated at the step S8 to judge whether or not the minimum providing frequencies 1011d, 1012d, ... of the respective advertisement data 1011, 1012, ... are satisfied (Step S9 of Fig. 2).

The judging method will be described below with reference to Fig. 6.

At first, it loads the minimum providing frequency 1011d, 1012d, ... of the respective advertisement data 1011, 1012, ... from the advertisement database 101 (Step S901 of Fig. 6). Hereafter, the explanation is done under the assumption that the advertisement data 1011 is loaded.

It accesses the output history memory 107 to investigate the number of times of previous providing in the advertisement data 1011. Also, it loads the providing advertisement list (Fig. 7) from the memory 1021, and refers to it to investigate how many advertisement ID numbers 1011a of the advertisement data 1011 are present in the providing advertisement list, and then uses its number as the number of schedule providing. The total number of the number of previous providing and the number of schedule providing are used as the number of times of providing in the advertisement data 1011 (Step S903 of Fig. 6).

If the number of times of providing in the advertisement data 1011 is greater than or equal to the minimum providing frequency 1011d of the advertisement data 1011 (Step S904 of Fig. 6 / YES), the similar processes (on and after the step S901 of Fig. 6) are repeated for the next advertisement data 1012, 1013, ... .

If the number of times of providing in the advertisement data 1011 is smaller than the minimum providing frequency 1011d of the advertisement data 1011 (Step S904 of Fig. 6 / NO), the following operations are done.

That is, it investigates the evaluation value fs with regard to the position of the advertisement (advertisement data 1011) at each advertisement providing point, and sorts the advertisement providing points in the order of decreasing the evaluation value fs. It generates a point list in which the higher advertisement providing points having the greater evaluation values fs are listed up, with regard to the advertisement data 1011, as the sorted result (Step S905 of Fig. 6). Its point list is stored in the memory 1021.

Next, it retrieves the advertisement providing points from the point list, in turn, one by one (Step S906 of Fig. 6/ exist).

Next, in the providing advertisement list, it is judged whether or not a column of the advertisement ID number used as a set in the advertisement providing point retrieved at the step S906 includes the advertisement ID number 1011a of the advertisement data 1011 (Step S907 of Fig. 6).

As the judged result at the step S907, if the advertisement ID number 1011a of the advertisement data 1011 is not included in the providing advertisement list (Step S907 of Fig. 6 / NO), the advertisement ID number 1011a of the advertisement data 1011 is added to the providing advertisement list (Step S908 of Fig. 6).

Then, it is judged whether or not a value in which 1 is added to the number of times of providing in the advertisement data 1011 is greater than or equal to the minimum providing frequency 1011d of the advertisement data 1011 (Step S904). The similar processes (on and after the steps S905 of Fig. 6) are done in accordance with its judged result.

As the judged result at the step S907, if the advertisement ID number 1011a of the advertisement data 1011 is included in the providing advertisement list (Step S907 of Fig. 6 / YES), a next advertisement providing point is retrieved from the point list. Then, the similar processes (from the step S906 to the step S908 of Fig. 6) are repeated.

If the number of times of providing in the advertisement data 1011 is smaller than the minimum providing frequency 1011d of the advertisement data 1011 (Step S904 of Fig. 6 / NO), after the judgment as to whether or not the advertisement data 1011 can be added to all the advertisement providing points in the point list (Step S906 of Fig. 6 / NO), the similar processes (on and after the step S901 of Fig. 6) are repeated for the next advertisement data 1012, 1013, ... .

The providing advertisement list at each advertisement providing point is finally generated as mentioned above. The sponsor of the advertisement can easily investigate the effect of the advertisement by analyzing the providing advertisement list.

A second embodiment of the present invention will be described below in detail with reference to the drawings.

Referring to Fig. 2, the second embodiment of the present invention is an information selecting method targeted for a car user, which includes:

a first procedure for retrieving the run schedule data 1031, ... from the schedule table database 103 (Step S1 of Fig. 2);

a second procedure for extracting the timing of advertisement providing 1031d in the run schedule data 1031, ..., and then determining the advertisement providing point on the route 1031c (Step S2 of Fig. 2);

a third procedure for calculating the evaluation values fs with regard to the positions of the respective advertisement data 1011, ..., at the respective advertisement providing points (Step S5 of Fig. 2);

a fourth procedure for calculating the evaluation values ft with regard to the times of the respective advertisement data 1011, ..., at the respective advertisement providing points (Step S6 of Fig. 2);

a fifth procedure for calculating the evaluation values fu with regard to the tastes of the respective advertisement data 1011, ..., at the respective advertisement providing points (Step S7 of Fig. 2);

a sixth procedure for multiplying the evaluation values fs with regard to the positions of the respective advertisement data 1011, ... by the weight ws, multiplying the evaluation values ft with regard to the times of the respective advertisement data 1011, ... by the weight wt, and multiplying the evaluation values fu with regard to the tastes of the respective advertisement data 1011, ... by the weight wu, respectively, and then calculating the total evaluation values f to which the respective multiplied results are added (Step S8 of Fig. 2);

a seventh procedure for generating the providing advertisement list including the sets of the positions of the advertisement providing points corresponding to those having the higher total evaluation values f and the advertisement ID numbers (Step S8 of Fig. 2); and

an eighth procedure for counting the number of times of respective advertisement ID numbers in the providing advertisement list, and then investigating whether or not the number satisfies the corresponding minimum providing frequency.

A third embodiment of the present invention will be described below in detail with reference to the drawings.

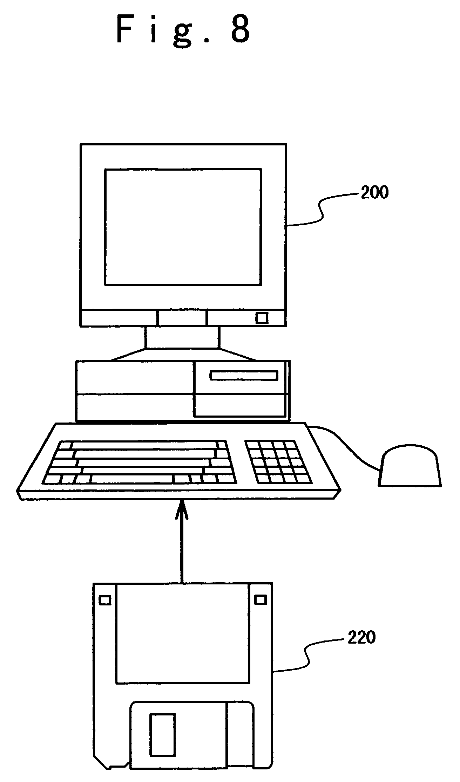

Fig. 8 is a diagrammatic view illustrating the third embodiment of the present invention.

Referring to Fig. 8, the third embodiment of the present invention is a recording medium 220 for recording a program through which the respective procedures of the second embodiment of the present invention are executed by a computer 200 (for example, the information selecting apparatus 100 targeted for the car user). The program is loaded from the recording medium 220 to the computer 200, and executed.

In detail, the third embodiment of the present invention is the recording medium 220 for recording the program through which the computer 200 executes the following procedures:

the first procedure for retrieving the run schedule data 1031, ... from the schedule table database 103 (Step S1 of Fig. 2);

the second procedure for extracting the timing of advertisement providing 1031d in the run schedule data 1031, ..., and then determining the advertisement providing point on the route 1031c (Step S2 of Fig. 2);

the third procedure for calculating the evaluation values fs with regard to the positions of the respective advertisement data 1011, ..., at the respective advertisement providing points (Step S5 of Fig. 2);

the fourth procedure for calculating the evaluation values ft with regard to the times of the respective advertisement data 1011, ..., at the respective advertisement providing points (Step S6 of Fig. 2);

the fifth procedure for calculating the evaluation values fu with regard to the tastes of the respective advertisement data 1011, ..., at the respective advertisement providing points (Step S7 of Fig. 2);

the sixth procedure for multiplying the evaluation values fs with regard to the positions of the respective advertisement data 1011, ... by the weight ws, multiplying the evaluation values ft with regard to the times of the respective advertisement data 1011, ... by the weight wt, and multiplying the evaluation values fu with regard to the tastes of the respective advertisement data 1011, ... by the weight wu, respectively, and then calculating the total evaluation values f to which the respective multiplied results are added (Step S8 of Fig. 2);

the seventh procedure for generating the providing advertisement list including the sets of the positions of the advertisement providing points corresponding to those having the higher total evaluation values f and the advertisement ID numbers (Step S8 of Fig. 2); and

the eighth procedure for counting the number of times of respective advertisement ID numbers in the providing advertisement list, and then investigating whether or not the number of times satisfies the corresponding minimum providing frequency.

The first effect of the present invention lies in the reduction in the uncomfortable feeling caused by the advertisement providing, for the car user.

This is because the advertisement is extracted by considering the taste of the user, the running time, the position of the car, and the location of the advertised shop, for the car user.

The second effect of the present invention lies in the satisfaction with the request of the sponsor with regard to the number of times of providing.

This is because the providing list of the advertisement is generated by considering the minimum providing frequency of advertisements required by the sponsor of the advertisement.

**Claims**

1. An information selecting method, comprising:

   (a) providing a plurality of advertisement data (1011), wherein each of said plurality of advertisement data (1011) includes a advertisement information (1011b) and a minimum providing frequency (1011d), said minimum providing frequency (1011d) indicating of a minimum number of times said advertisement information (1011b) is provided to a user of a vehicle;

   (b) counting a previous number of times said advertisement information (1011b) has been provided to said user during a past period;

   (c) setting a plurality of advertisement providing position data, each of said plurality of advertisement position data indicating of a specific position where said advertisement information (1011b) is provided to said user;

   (d) evaluating each of said plurality of advertisement data (1011) at said specific position corresponding to each of said plurality of advertisement position data;

(e) generating a specific evaluation value based on the result of said evaluation (d);

(f) selecting a predetermined number of said advertisement data (1011) based on said specific evaluation value;

(g) determining a schedule number of times said advertisement information (1011b) is provided to said user during a next period based on the result of said selection (f);

(h) judging whether or not said minimum providing frequency (1011d) is satisfied in each advertisement data (1011); and

(i) controlling said schedule number such that said minimum providing frequency (1011d) is satisfied in each advertisement data (1011).

2. An information selecting method according to Claim 1, further comprising:

(j) evaluating each of said plurality of advertisement data (1011) with regard to a position at said specific position corresponding to each of said plurality of advertisement position data to generate a position evaluation value (fs), and

wherein said step (e) includes generating said specific evaluation value based on said position evaluation value (fs), and

wherein said step (i) includes controlling said schedule number based on said position evaluation value (fs).

3. An information selecting method according to Claim 1, further comprising:

(k) evaluating each of said plurality of advertisement data (1011) with regard to a time at said specific position corresponding to each of said plurality of advertisement position data to generate a time evaluation value (ft), and

wherein said step (e) includes generating said specific evaluation value based on said time evaluation value (ft).

4. An information selecting method according to Claim 1, wherein said step (a) includes providing said plurality of advertisement data (1011), said each advertisement data (1011) including an attribute (1011f) in addition to said advertisement information (1011b) and said minimum providing frequency (1011d), and

wherein said information selecting method further comprising:

(l) providing a taste data indicating a taste of said user; and

(m) evaluating each of said plurality of advertisement data (1011) with regard to a taste at said specific position corresponding to each of said plurality of advertisement position data to generate a taste evaluation value (fu) based on said taste data and said attribute (1011f), and

wherein said step (e) includes generating said specific evaluation value based on said taste evaluation value (fu).

5. An information selecting method according to Claim 1, wherein said step (a) includes providing cludes providing said plurality of advertisement data (1011), said each advertisement data (1011) including an attribute (1011f) in addition to said advertisement information (1011b) and said minimum providing frequency (1011d), and

wherein said information selecting method further comprising:

(n) providing a taste data indicating a taste of said user; and

(o) evaluating each of said plurality of advertisement data (1011) with regard to a taste at said specific position corresponding to each of said plurality of advertisement position data to generate a taste evaluation value (fu) based on said taste data and said attribute (1011f), and

(p) evaluating each of said plurality of advertisement data (1011) with regard to a position at said specific position corresponding to each of said plurality of advertisement position data to generate a position evaluation value (fs), and

(q) evaluating each of said plurality of advertisement data (1011) with regard to a time at said specific position corresponding to each of said plurality of advertisement position data to generate a time evaluation value (ft), and

wherein said step (e) includes generating said specific evaluation value based on said position evaluation value (fs), said time evaluation value (ft) and said taste evaluation value (fu).

**6.** An information selecting method according to one of Claims 1 to 5, wherein said step (c) includes setting said plurality of advertisement providing position data based on a route data (1031c) indicating of a running route of said vehicle, a vehicle position data indicating of a current position of said vehicle and an advertisement providing timing data (1031d) indicating of a timing when said advertisement information (1011b) is provided.

**7.** An information selecting method according to Claim 6, wherein said timing of said advertisement providing timing data (1031d) corresponds to one of a predetermined time, a predetermined length and a predetermined dividing number of a distance.

**8.** An information selecting method according to Claim 2, wherein said step (a) includes providing said plurality of advertisement data (1011), said each advertisement data (1011) including a shop position data indicating of a position of a shop of which said advertisement information (1011b) is provided in addition to said advertisement information (1011b) and said minimum providing frequency (1011d), and
wherein said step (j) includes:

(r) calculating a distance from said shop to said specific position corresponding to each of said plurality of advertisement position data based on said shop position data and each of said plurality of advertisement providing position data; and
(s) generating said position evaluation value (fs) based on said distance.

**9.** An information selecting method according to Claim 3, wherein said step (a) includes providing said plurality of advertisement data (1011), said each advertisement data (1011) including a shop position data indicating of a position of a shop of which said advertisement information (1011b) is provided and a providing recommendation period (1011e) which is recommended for providing said advertisement information (1011b) in addition to said advertisement information (1011b) and said minimum providing frequency (1011d), and
wherein said step (k) includes

(t) calculating a distance from said shop to said specific position corresponding to each of said plurality of advertisement position data based on said shop position data and each of said plurality of advertisement providing position data;
(u) calculating a arrival expectation time when said vehicle arrives at said shop based on said distance and a current time; and
(v) generating said time evaluation value (ft) based on said providing recommendation period (1011e) and said arrival expectation time.

**10.** An information selecting method according to Claim 4, wherein each of said attribute (1011f) and said taste data is represented by a keyword vector and
wherein said step (m) includes generating said taste evaluation value (fu) based on a distance between said keyword vector of said attribute (1011f) and said keyword vector of said taste data.

**11.** An information selecting apparatus, comprising:

a advertisement database (101) including a plurality of advertisement data (1011), wherein each of said plurality of advertisement data (1011) includes a advertisement information (1011b) and a minimum providing frequency (1011d), said minimum providing frequency (1011d) indicating of a minimum number of times said advertisement information (1011b) is provided to a user of a vehicle;
an output history memory (107) counting a previous number of times said advertisement information (1011b) has been provided to said user during a past period;
an advertisement ranking generator (102) setting a plurality of advertisement providing position data, each of said plurality of advertisement position data indicating of a specific position where said advertisement information (1011b) is provided to said user and evaluating each of said plurality of advertisement data (1011) at said specific position corresponding to each of said plurality of advertisement position data to generate a specific evaluation value and selecting a predetermined number of said advertisement data (1011) based on said specific evaluation value to determine a schedule number of times said advertisement information (1011b) is provided to said user during a next period and judging whether or not said minimum providing frequency (1011d) is satisfied in each advertisement data (1011); and controlling said schedule number such that said minimum providing frequency (1011d) is satisfied in each advertisement data (1011).

**12.** An information selecting apparatus according to Claim 11, wherein said advertisement ranking generator (102) evaluates each of said plurality of advertisement data (1011) with regard to a position at said specific position corresponding to each of said plurality of advertisement position data to generate a position evaluation value (fs), and

wherein said advertisement ranking generator (102) generates said specific evaluation value based on said position evaluation value (fs), and controls said schedule number based on said position evaluation value (fs).

**13.** An information selecting apparatus according to Claim 11, wherein said advertisement ranking generator (102) evaluates each of said plurality of advertisement data (1011) with regard to a time at said specific position corresponding to each of said plurality of advertisement position data to generate a time evaluation value (ft), and generates said specific evaluation value based on said time evaluation value (ft).

**14.** An information selecting apparatus according to Claim 11, wherein said each advertisement data (1011) includes an attribute (1011f) in addition to said advertisement information (1011b) and said minimum providing frequency (1011d), and

wherein said information selecting apparatus (100) further comprising:

a taste obtainer (106) providing a taste data indicating a taste of said user; and
wherein said advertisement ranking generator (102) evaluates each of said plurality of advertisement data (1011) with regard to a taste at said specific position corresponding to each of said plurality of advertisement position data to generate a taste evaluation value (fu) based on said taste data and said attribute (1011f), and generates said specific evaluation value based on said taste evaluation value (fu).

**15.** An information selecting apparatus according to Claim 11, wherein said each advertisement data (1011) includes an attribute (1011f) in addition to said advertisement information (1011b) and said minimum providing frequency (1011d), and

wherein said information selecting apparatus (100) further comprising:

a taste obtainer (106) providing a taste data indicating a taste of said user; and
wherein said advertisement ranking generator (102) evaluates each of said plurality of advertisement data (1011) with regard to a taste at said specific position corresponding to each of said plurality of advertisement position data to generate a taste evaluation value (fu) based on said taste data and said attribute (1011f), and evaluates each of said plurality of advertisement data (1011) with regard to a position at said specific position corresponding to each of said plurality of advertisement position data to generate a position evaluation value (fs), and evaluates each of said plurality of advertisement data (1011) with regard to a time at said specific position corresponding to each of said plurality of advertisement position data to generate a time evaluation value (ft), and

wherein said advertisement ranking generator (102) generates said specific evaluation value based on said position evaluation value (fs), said time evaluation value (ft) and said taste evaluation value (fu).

**16.** An information selecting apparatus according to Claim 11, wherein said advertisement ranking generator (102) sets said plurality of advertisement providing position data based on a route data (1031c) indicating of a running route of said vehicle, a vehicle position data indicating of a current position of said vehicle and an advertisement providing timing data (1031d) indicating of a timing when said advertisement information (1011b) is provided.

**17.** An information selecting apparatus according to Claim 16, wherein said timing of said advertisement providing timing data (1031d) corresponds to one of a predetermined time, a predetermined length and a predetermined dividing number of a distance.

**18.** An information selecting apparatus according to Claim 12, wherein said each advertisement data (1011) includes a shop position data indicating of a position of a shop of which said advertisement information (1011b) is provided in addition to said advertisement information (1011b) and said minimum providing frequency (1011d), and

wherein said advertisement ranking generator (102) calculates a distance from said shop to said specific position corresponding to each of said plurality of advertisement position data based on said shop position data and each of said plurality of advertisement providing position data; and generates said position evaluation value (fs) based on said distance.

**19.** An information selecting apparatus according to Claim 13, wherein said each advertisement data (1011) includes a shop position data indicating of a position of a shop of which said advertisement information (1011b) is provided and a providing recommendation period (1011e) which is recommended for providing said advertisement information (1011b) in addition to said advertisement information (1011b) and said minimum providing frequency (1011d), and

wherein said advertisement ranking generator (102) calculates a distance from said shop to said specific position corresponding to each of said plurality of advertisement position data based on said shop position data and each of said plurality of advertisement providing position data, and calculates a arrival expectation time when said vehicle arrives at said shop based on said distance and a current time and generates said time evaluation value (ft) based on said providing recommendation period (1011e) and said arrival expectation time.

20. An information selecting apparatus according to Claim 14, wherein each of said attribute (1011f) and said taste data is represented by a keyword vector and

wherein said advertisement ranking generator (102) generates said taste evaluation value (fu) based on a distance between said keyword vector of said attribute (1011f) and said keyword vector of said taste data.

Fig. 1

| ADVERTISEMENT<br>ID NUMBER | ADVERTISEMENT<br>ID NUMBER | ADVERTISEMENT<br>ID NUMBER | 1011a |
| ADVERTISEMENT<br>INFORMATION | ADVERTISEMENT<br>INFORMATION | ADVERTISEMENT<br>INFORMATION | 1011b |
| SHOP<br>INFORMATION | SHOP<br>INFORMATION | SHOP<br>INFORMATION | 1011c |
| MINIMUM<br>PROVIDING<br>FREQUENCY | MINIMUM<br>PROVIDING<br>FREQUENCY | MINIMUM<br>PROVIDING<br>FREQUENCY | 1011d |
| RECOMMENDED<br>PERIOD<br>OF PROVIDING | RECOMMENDED<br>PERIOD<br>OF PROVIDING | RECOMMENDED<br>PERIOD<br>OF PROVIDING | 1011e |
| ATTRIBUTE | ATTRIBUTE | ATTRIBUTE | 1011f |

1013    1012    1011

| SCHEDULE<br>ID | GOAL | ROUTE | TIMING OF<br>ADVERTISEMENT<br>PROVIDING | 1031 |
| SCHEDULE<br>ID | GOAL | ROUTE | TIMING OF<br>ADVERTISEMENT<br>PROVIDING | 1032 |
| SCHEDULE<br>ID | GOAL | ROUTE | TIMING OF<br>ADVERTISEMENT<br>PROVIDING | 1033 |

100

1031a 1031b 1031c    1031d

OUTPUT HISTORY MEMORY — 107

ADVERTISEMENT DATABASE — 101

ADVERTISEMENT RANKING GENERATOR — 102

MEMORY — 1021

SCHEDULE TABLE DATABASE — 103

105

TIME OBTAINER — 104

POSITION OBTAINER

TASTE OBTAINER — 106

EP 1 098 262 A2

# Fig. 2

```
            START
```

**S1**
RUN SCHEDULE DATA IS RETRIEVED FROM
SCHEDULE TABLE DATABASE.

**S2**
ADVERTISEMENT PROVIDING POINT IS DETERMINED BASED ON
TIMING OF ADVERTISEMENT PROVIDING OF RUN SCHEDULE DATA.

**S3**
ONE ADVERTISEMENT PROVIDING POINT IS LOADED.

**S4**
IS THERE A ADVERTISEMENT PROVIDING POINT ?   NO

YES

**S5**
RESPECTIVE POSITIONS OF ADVERTISEMENT DATA ARE
EVALUATED WITH REGARD TO ADVERTISEMENT PROVIDING POINT.

**S6**
ARRIVAL EXPECTATION TIME OF ADVERTISEMENT PROVIDING POINT
IS CALCULATED TO ESTIMATE TIME OF ADVERTISEMENT DATA
WITH REGARD TO ADVERTISEMENT PROVIDING POINT.

**S7**
TASTE OF ADVERTISEMENT DATA ARE EVALUATED WITH
REGARD TO ADVERTISEMENT PROVIDING POINT.

**S8**
RESPECTIVE EVALUATION VALUES OF RESPECTIVE ADVERTISEMENT
DATA WITH REGARD TO RESPECTIVE ADVERTISEMENT PROVIDING
POINTS ARE COMBINED TO LIST ADVERTISEMENTS HAVING THE
HIGH COMBINED EVALUATION VALUE IN PROVIDING ADVERTISEMENT
LIST WITH REGARD TO ADVERTISEMENT PROVIDING POINT.

**S9**
PROVIDING ADVERTISEMENT LISTS OF RESPECTIVE ADVERTISEMENT
PROVIDING POINTS ARE CHECKED WHETHER OR NOT
MINIMUM PROVIDING FREQUENCY OF
RESPECTIVE ADVERTISEMENTS ARE SATISFIED.

```
            END
```

# Fig. 3

```
                    ┌─────────────────┐
                    │      START      │
                    └─────────────────┘
                             │
        ┌────────────────────────────────────────────┐
        │       POSITION INFORMATION OF              │ ╲___ S501
        │   ADVERTISEMENT PROVIDING POINT IS LOADED. │
        └────────────────────────────────────────────┘
                             │
        ┌──────────────────────────────────────────┐
   ──►  │     ONE ADVERTISEMENT DATA IS LOADED.     │ ╲___ S502
        └──────────────────────────────────────────┘
                             │
                                              S503
                   ╱                    ╲              NO
                  ◄  IS THERE A ADVERTISEMENT DATA ?  ►──────┐
                   ╲                    ╱                    │
                             │ YES                           │
        ┌──────────────────────────────────────────┐        │
        │   DISTANCE TO ADVERTISEMENT PROVIDING     │ ╲___ S504
        │   POINT FROM SHOP OF ADVERTISEMENT        │        │
        │        DATA IS CALCULATED.                │        │
        └──────────────────────────────────────────┘        │
                             │                               │
        ┌──────────────────────────────────────────┐        │
        │        POSITION OF ADVERTISEMENT          │ ╲___ S505
        │          DATA IS EVALUATED.               │        │
        └──────────────────────────────────────────┘        │
                             │                               │
                                                             │
                    ┌─────────────────┐                      │
                    │       END       │ ◄────────────────────┘
                    └─────────────────┘
```

# Fig. 4

```
                    ┌─────────────────────┐
                    │        START        │
                    └─────────────────────┘
                               │
        ┌──────────────────────────────────────────┐
        │  POSITION INFORMATION OF ADVERTISMENT     │──S601
        │  PROVIDING POINT IS LOADED.               │
        └──────────────────────────────────────────┘
                               │
                    ┌──────────────────────┐
                    │ ONE ADVERTISEMENT DATA IS LOADED. │──S602
                    └──────────────────────┘
                               │                    S603
                   ╱─────────────────────────────╲      NO
                  ╱  IS THERE A ADVERTISEMENT DATA ? ╲──────────┐
                   ╲─────────────────────────────╱             │
                               │ YES                           │
        ┌──────────────────────────────────────────┐           │
        │  DISTANCE TO ADVERTISEMENT PROVIDING      │──S604     │
        │  POINT FROM SHOP OF ADVERTISEMENT         │           │
        │  DATA IS CALCULATED.                      │           │
        └──────────────────────────────────────────┘           │
                               │                                │
        ┌──────────────────────────────────────────┐           │
        │  ARRIVAL EXPECTATION TIME OF THE SHOP     │──S605     │
        │  IS CALCULATED BASED ON THE CALCULATED    │           │
        │  DISTANCE AND THE CURRENT TIME.           │           │
        └──────────────────────────────────────────┘           │
                               │              S606              │
                   ╱─────────────────────────────╲    NO       │
                  ╱  IS THE ARRIVAL EXPECTATION    ╲────────┐   │
                  ╲  TIME WITHIN THE RECOMMENDED   ╱        │   │
                   ╲ PERIOD OF PROVIDING ?        ╱  S608   │   │
                   ╲─────────────────────────────╱         ↓   │
                               │ YES      ┌──────────────────────────┐
        S607                             │  THE EVALUATION VALUE IS SET │
                                         │  AT A LOW POINT.             │
        ┌──────────────────────────────┐ └──────────────────────────┘
        │  THE EVALUATION VALUE IS SET  │              │
        │  AT A HIGH POINT.             │              │
        └──────────────────────────────┘              │
                               │                       │
                               ↓                       │
                    ┌─────────────────────┐            │
                    │         END         │◄───────────┘
                    └─────────────────────┘
```

# Fig. 5

```
                    ┌──────────────────┐
                    │      START       │
                    └──────────────────┘
                             │
          ┌──────────────────────────────────┐
          │   TASTE OF DRIVER IS LOADED       │  ～S701
          │   FROM TASTE OBTAINER.            │
          └──────────────────────────────────┘
                             │
          ┌──────────────────────────────────┐
          │   ONE ADVERTISEMENT DATA IS LOADED.│  ～S702
          └──────────────────────────────────┘
                             │                    S703
                      ◇──────────────◇
               ◇ IS THERE A ADVERTISEMENT DATA ? ◇────── NO
                      ◇──────────────◇
                             │ YES
          ┌──────────────────────────────────┐
          │   A SET OF KEYWORDS OF ATTRIBUTE OF│  ～S704
          │   ADVERTISEMENT DATA ARE RETRIEVED.│
          └──────────────────────────────────┘
                             │
          ┌──────────────────────────────────┐
          │ THE SET OF KEYWORDS OF ADVERTISEMENT DATA │
          │ ARE COMPARED WITH THE SET OF KEYWORDS OF  │  ～S705
          │ TASTES TO EVALUATE HOW THE ADVERTISEMENT  │
          │ IS SUITABLE FOR THE TASTE OF THE USER.    │
          └──────────────────────────────────┘
                             │
                    ┌──────────────────┐
                    │       END        │
                    └──────────────────┘
```

# Fig. 6

```
                        ┌─────────────────┐
                        │      START      │
                        └─────────────────┘
                                 │ ◄────────────────────────┐
                  ┌──────────────────────────────────────┐  │
       S901 ~     │ ONE ADVERTISEMENT DATA AND           │  │
                  │ THE MINIMUM PROVIDING FREQUENCY ARE   │  │
                  │ LOADED.                               │  │
                  └──────────────────────────────────────┘  │
            S902             │                               │
       NO  ◄──────< IS THERE A ADVERTISEMENT DATA ? >        │
        │                    │ YES                           │
        │        ┌──────────────────────────────────────┐   │
        │        │ OUTPUT HISTORY MEMORY IS ACCESSED TO  │   │
        │        │ INVESTIGATE THE FREQUENCY OF PREVIOUS │   │
        │  S903~ │ PROVIDING OF ADVERTISEMENT.           │   │
        │        │ RESPECTIVE PROVIDING ADVERTISEMENT    │   │
        │        │ LISTS OF RESPECTIVE ADVERTISEMENT     │   │
        │        │ PROVIDING POINTS ARE CHECKED TO       │   │
        │        │ INVESTIGATE THE FREQUENCY OF PROVIDING│   │
        │        │ OF THE ADVERTISEMENT. THE TWO NUMBERS │   │
        │        │ ARE TOTALED.                          │   │
        │        └──────────────────────────────────────┘   │
        │    S904 ──►│                                       │
        │      ◄────< THE TOTALED NUMBER IS GREATER THAN >   │
        │            < THE MINIMUM PROVIDING FREQUENCY ? >─YES►
        │                    │ NO                            │
        │        ┌──────────────────────────────────────┐   │
        │        │ EVALUATION VALUES WITH REGARD TO      │   │
        │        │ POSITIONS OF ADVERTISEMENTS OF        │   │
        │  S905~ │ RESPECTIVE ADVERTISEMENT PROVIDING    │   │
        │        │ POINTS ARE INVESTIGATED TO SORT THE   │   │
        │        │ ADVERTISEMENT PROVIDING POINTS IN     │   │
        │        │ ORDER OF DECREASING THE EVALUATION    │   │
        │        │ VALUE.                                │   │
        │        └──────────────────────────────────────┘   │
        │  S906         │ ◄─────────────────────────┐        │
        │      ◄────< ONE ADVERTISEMENT PROVIDING   >  NOT   │
        │            < POINT IS LOADED FROM POINT    > EXIST ┘
        │            < LIST.                         >
        │    S907            │ EXIST
        │  NO  ◄────< IS THE ADVERTISEMENT INCLUDED IN >
        │            < THE PROVIDING ADVERTISEMENT LIST?>
        │  S908             │ YES
        │ ┌──────────────────────────────────┐
        │ │ THE ADVERTISEMENT IS ADDED TO     │
        │ │ PROVIDING ADVERTISEMENT LIST. ONE │
        │ │ IS ADDED TO THE PROVIDING         │
        │ │ FREQUENCY.                        │
        │ └──────────────────────────────────┘
        │                    │
        └────────────────────┤
                             │
                        ┌─────────────────┐
                        │       END       │
                        └─────────────────┘
```

21

# Fig. 7

| ADVERTISEMENT PROVIDING POINT ( LATITUDE , LONGITUDE ) | ADVERTISEMENT ID NUMBER |
|---|---|
| (139° 50″ , 35° 20″) | 001 |
| (139° 50″ , 35° 20″) | 002 |
| (140° 00″ , 36° 00″) | 003 |
| (140° 00″ , 36° 00″) | 004 |
| (140° 10″ , 36° 10″) | 001 |
| (140° 10″ , 36° 10″) | 003 |

# Fig. 8

200

220